# EUROPÄISCHE PATENTANMELDUNG

(11) **EP 3 382 857 A1**
(43) Veröffentlichungstag der Anmeldung: **03.10.2018**
(21) Anmeldenummer: 17164218.4
(22) Anmeldetag: 31.03.2017
(51) Int. Cl.: H02K 5/15, H02K 11/215

(54) **ELEKTRISCHE MASCHINE, SOWIE VERFAHREN ZUM BETREIBEN EINER SOLCHEN ELEKTRISCHEN MASCHINE**

(71) Anmelder: Siemens Aktiengesellschaft, 80333 München (DE)
(72) Erfinder: Büttner, Klaus, 97618 Hollstadt (DE); Warmuth, Matthias, 97618 Windshausen (DE); Werner, Timur, 91058 Erlangen (DE); Zettner, Jürgen, 90587 Veitsbronn (DE)

(57) **Zusammenfassung**

Die Erfindung betrifft eine elektrische Maschine (10), mit einem Stator (12), mit einem um eine Drehachse (16) relativ zu dem Stator (12) drehbaren Rotor (16), mit einem Maschinengehäuse (22), in welchem der Stator (12) und der Rotor (14) jeweils zumindest überwiegend aufgenommen sind, mit einem separat von dem Maschinengehäuse (22) ausgebildeten und an dem Maschinengehäuse (22) gehaltenen Deckelelement (26), mit einem Aufnahmeraum (28), welcher jeweils teilweise durch das Maschinengehäuse (22) und durch das Deckelelement (26) begrenzt ist, und mit einer zum Erfassen von Drehstellungen und/oder einer Drehzahl des Rotors (14) ausgebildeten Erfassungseinrichtung (34), welche wenigstens ein in dem Aufnahmeraum (28) angeordnetes und mit dem Rotor (14) mitdrehbares erstes Sensorelement (36) und wenigstens eine in dem Aufnahmeraum (28) angeordnete Leiterplatte (42) mit zumindest einem zweiten Sensorelement (44) aufweist, mittels welchem unter Zusammenwirken mit dem ersten Sensorelement (36) die Drehstellungen und/oder die Drehzahl des Rotors (14) erfassbar sind, wobei die Leiterplatte (42) an dem Deckelelement (26) gehalten ist.

## Beschreibung

Die Erfindung betrifft eine elektrische Maschine gemäß dem Oberbegriff von Patentanspruch 1, sowie ein Verfahren zum Betreiben einer solchen elektrischen Maschine gemäß dem Oberbegriff von Patentanspruch 15.

Eine solche elektrische Maschine sowie ein solches Verfahren zum Betreiben einer elektrischen Maschine sind beispielsweise bereits aus der DE 10 2011 012 357 A1 und aus der DE 10 2009 023 691 A1 bekannt. Die elektrische Maschine weist dabei einen Stator und einen Rotor auf, welcher um eine Drehachse relativ zu dem Stator drehbar ist. Außerdem umfasst die elektrische Maschine ein Maschinengehäuse, in welchem der Stator und der Rotor jeweils zumindest überwiegend aufgenommen sind. Beispielsweise ist der Rotor vollständig in dem Maschinengehäuse aufgenommen. Des Weiteren ist ein separat von dem Maschinengehäuse ausgebildetes Deckelelement vorgesehen, welches an dem Maschinengehäuse gehalten ist. Außerdem weist die elektrische Maschine einen Aufnahmeraum auf, welcher jeweils teilweise durch das Maschinengehäuse und durch das Deckelelement begrenzt ist.

Die elektrische Maschine umfasst ferner eine Erfassungseinrichtung, welche zum Erfassen von Drehstellungen und/oder einer Drehzahl des Rotors ausgebildet ist. Dabei umfasst die Erfassungseinrichtung wenigstens ein in dem Aufnahmeraum angeordnetes erstes Sensorelement, welches mit dem Rotor mitdrehbar und dabei beispielsweise drehfest mit dem Rotor verbunden ist. Außerdem umfasst die Erfassungseinrichtung eine in dem Aufnahmeraum angeordnete Leiterplatte mit zumindest einem zweiten Sensorelement, mittels welchem unter Zusammenwirken mit dem ersten Sensorelement die Drehstellungen bzw. die Drehzahl des Rotors erfassbar sind bzw. ist.

Des Weiteren offenbart die DE 10 2006 030 736 A1 einen Elektromotor, mit Magnetfeld erzeugenden Wicklungen, wobei ein Sensor zur Detektion von Winkellage des Rotors oder zumindest zur Detektion der Umdrehungen vorgesehen ist. Dabei umfasst der Sensor zumindest einen Impulsdrahtsensor und/oder Wiegand-Sensor, wobei zwischen Sensor und mindestens einer Wicklung zumindest eine Abschirmung vorgesehen ist.

Außerdem ist der DE 43 11 267 A1 ein Positionsgeber zur Überwachung der Radialwinkelstellung und/oder der Winkelgeschwindigkeit und/oder der Drehrichtung einer insbesondere von einem Elektromotor angetriebenen Welle als bekannt zu entnehmen.

Aufgabe der vorliegenden Erfindung ist es, eine elektrische Maschine und ein Verfahren der eingangs genannten Art derart weiterzuentwickeln, dass die Drehstellungen bzw. die Drehzahl des Rotors auf besonders bauraum- und kostengünstige Weise sowie besonders präzise erfasst werden können bzw. kann.

Diese Aufgabe wird durch eine elektrische Maschine mit den Merkmalen des Patentanspruchs 1 sowie durch ein Verfahren mit den Merkmalen des Patentanspruchs 15 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine elektrische Maschine, welche einen Stator und einen Rotor aufweist. Dabei ist der Rotor um eine Drehachse relativ zu dem Stator drehbar und beispielsweise von dem Stator antreibbar. Die elektrische Maschine weist dabei ein Maschinengehäuse auf, in welchem der Stator und der Rotor jeweils zumindest überwiegend aufgenommen sind. Beispielsweise ist der Stator vollständig in dem Maschinengehäuse aufgenommen. Außerdem ist ein separat von dem Maschinengehäuse ausgebildetes Deckelelement vorgesehen, welches an dem Maschinengehäuse gehalten ist. Dies bedeutet, dass das Deckelelement und das Maschinengehäuse an sich separate Einzelbauteile sind, welche miteinander verbunden sind.

Dabei ist ferner ein Aufnahmeraum vorgesehen, welcher jeweils teilweise durch das Maschinengehäuse und durch das Deckelelement begrenzt ist. Diese bedeutet beispielsweise, dass der Aufnahmeraum zu einem ersten Teil von dem Maschinengehäuse und zu einem zweiten Teil von dem Deckelelement begrenzt ist, wobei beispielsweise der zweite Teil größer als der erste Teil ist. Außerdem umfasst die elektrische Maschine eine zum Erfassen von Drehstellungen und/oder einer Drehzahl des Rotors ausgebildete Erfassungseinrichtung, welche wenigstens ein in dem Aufnahmeraum angeordnetes und mit dem Rotor mitdrehbares erstes Sensorelement und wenigstens eine in dem Aufnahmeraum angeordnete Leiterplatte mit zumindest einem zweiten Sensorelement aufweist. Die Leiterplatte wird auch als Leiterkarte, Platine oder Elektroplatine bezeichnet und ist vorzugsweise als gedruckte Schaltung, d.h. als PCB (Printed Circuit Board) ausgebildet. Das zweite Sensorelement ist beispielsweise ein elektronisches Bauteil, welches an der Leiterplatte gehalten ist bzw. Bestandteil der Leiterplatte ist, sodass die Leiterplatte ein Träger für das elektronische Bauteil ist.

Mittels des zweiten Sensorelements sind unter Zusammenwirken mit dem ersten Sensorelement die Drehstellungen und/oder die Drehzahl des Rotors erfassbar, wobei die jeweilige Drehstellung beispielsweise auch als Drehwinkel oder Winkellage bezeichnet wird. Somit ist mittels der Erfassungseinrichtung beispielsweise eine Drehwinkelerfassung realisierbar, um eine Drehzahl-, Momenten- oder Lageregelung der elektrischen Maschine zu realisieren.

Um nun die Drehstellungen bzw. die Drehzahl des Rotors auf besonders bauraum- und kostengünstige Weise und besonders präzise erfassen zu können, ist es erfindungsgemäß vorgesehen, dass die Leiterplatte an dem Deckelelement gehalten ist. Dadurch können beispielsweise die Leiterplatte und somit das zweite Sensorelement zusammen mit dem Deckelelement an dem Maschinengehäuse montiert bzw. von dem Maschinengehäuse demontiert werden.

Die Leiterplatte mit dem zweiten Sensorelement bildet beispielsweise einen sogenannten Drehgeber, welcher einfach auch als Geber bezeichnet wird. Mittels des Drehgebers wird bzw. werden unter Zusammenwirken mit dem ersten Sensorelement die Drehzahl bzw. die Drehstellungen erfasst, wobei der Drehgeber beispielsweise wenigstens ein die erfassten Drehstellungen bzw. die erfasste Drehzahl charakterisierendes, insbesondere elektrisches, Signal bereitstellt. Der Drehgeber weist somit eine Geberfunktionalität auf, welche insbesondere darin besteht, die Drehzahl bzw. die Drehstellungen zu erfassen sowie beispielsweise das Signal bereitzustellen. Dabei ist es erfindungsgemäß vorgesehen, dass die Leiterplatte mit dem zweiten Sensorelement derart an dem Deckelelement gehalten und somit angeordnet ist, dass die Geberfunktionalität vollständig in dem Deckelelement erfolgt bzw. vorgenommen wird.

Der Erfindung liegt dabei insbesondere die folgende Erkenntnis zugrunde: Herkömmlicherweise erfolgt eine Drehwinkel- bzw. Drehzahlerfassung zur Drehzahl-, Momenten- oder Lageregelung von elektrischen Maschinen durch diverse Drehgeber unterschiedlichster Auflösung bzw. Genauigkeitsklassen, wobei der jeweilige Drehgeber beispielsweise als TTL-Strichgeber, als Resolver oder als sin/cos-Geber ausgebildet ist. Ferner ist üblicherweise der jeweilige Drehgeber bei herkömmlichen elektrischen Maschinen als sogenannter Anbaugeber ausgebildet. Ein solcher Anbaugeber ist ein kommerziell verfügbarer, eigengelagerter Geber, welcher "on axis", d.h. koaxial zur Drehachse mittels einer Drehmomentstütze insbesondere auf einer Nicht-Abtriebsseite der jeweiligen elektrischen Maschine angebracht ist, wobei die Nicht-Abtriebsseite auch als B-Seite bezeichnet wird. Anbaugeber als Zukaufteile müssen vom jeweiligen Hersteller robust gebaut werden, da diese als au-ßenliegendes Bauteil Umwelt- und Handhabungseinflüssen ausgesetzt sind, jedoch bei empfindlichem Innenleben und bei kritischer Justage zur Pollage der elektrischen Maschine. Die Anbaugeber sind üblicherweise außerhalb des Aufnahmeraums angeordnet und schließen sich in axialer Richtung an das Deckelelement an, wodurch es herkömmlicherweise zu einer Vergrößerung des Bauraumbedarfs der elektrischen Maschine insbesondere in axialer Richtung kommt, wenn die Erfassungseinrichtung bzw. der Drehgeber genutzt wird.

Diese Bauraumvergrößerung kann nun bei der erfindungsgemäßen elektrischen Maschine vermieden werden, da der Drehgeber, d.h. die Leiterplatte mit dem zweiten Sensorelement, in das Deckelelement integriert ist bzw. sind. Ferner sind sowohl der Drehgeber als auch das erste Sensorelement in dem Aufnahmeraum angeordnet. Mit anderen Worten beanspruchen Anbaugeber vor allem Bauraum, d.h. Platz in Längsrichtung bzw. in axialer Richtung der elektrischen Maschine, insbesondere auch dann, wenn sie in einem verlängerten Motorgehäuse untergebracht sind, was nun jedoch aufgrund der Integration des Drehgebers in das Deckelelement vermieden werden kann.

Optische Geberprinzipien sind derzeit wegen der erzielbaren Geber-Genauigkeit bei Anbaugebern am meisten verbreitet. Magnetische Geber übernehmen Marktanteile, die Anzahl der Anbieter wächst. Ausschlaggebend für diese Entwicklung sind Kosten und Robustheit. Bei magnetischen Gebern ist auf hinreichende Abschirmung externer oder maschineninduzierter Magnetfelder zu achten, um die Drehstellung- bzw. Drehwinkelerfassung oder Drehzahlerfassung nicht zu stören. Anbaugeber dienen in der Regel bei Asynchronmaschinen als Drehzahlgeber und werden vor allem im Maschinenhochlauf bzw. zur Drehrichtungsinformation oder sogar ausschließlich als sicherheitsrelevanter Sensorkanal zur Überwachung eines geberlosen Betriebs und zur Vermeidung anfälliger, sensibler Gebersensorik (Resolver, optischer Geber, usw.) genutzt. Zum Teil sind aufwendige Konstruktionen zum Schutz derartiger Anbaugeber notwendig, welche den Bauraum noch einmal erheblich vergrößern, was nun bei der erfindungsgemäßen elektrischen Maschine vermieden werden kann. Ferner sind herkömmlicher Drehgeber und deren Anordnung an der elektrischen Maschine kostenintensiv, was ebenfalls vermieden werden kann. Drehgeber erfordern als Zukauf- bzw. Anbauteile einen hohen Montage- und Justageaufwand in der Fertigung der elektrischen Maschine, wobei für einen Drehgeber eine maximale Toleranz bezüglich der Ausrichtung beim Einbau vorteilhaft ist. Bei der erfindungsgemäßen elektrischen Maschine kann eine besonders einfache Montage realisiert werden. Ferner kann der Justageaufwand besonders gering gehalten werden.

Bei hohen Drehzahlen stellen herkömmliche Anbaugeber eine unnötige Limitierung dar, insbesondere hinsichtlich der maximalen Umfangsgeschwindigkeit der Maßverkörperung, wobei erhöhte Vibrationen die typischen, bei optischen Gebern notwendige mikrometergenaue Messung unzuverlässig werden lassen. Geber sind jedoch bei hohen Drehzahlen nicht unbedingt zur Motorregelung erforderlich, sondern nur für den Maschinenanlauf wichtig. Ferner wurde gefunden, dass herkömmliche Geber bzw. Resolver nicht servicegerecht sind, sodass sie beispielsweise in einer Automobilwerkstatt nicht einfach ausgetauscht werden können.

Dies kann jedoch bei der erfindungsgemäßen elektrischen Maschine auf einfache Weise dadurch realisiert werden, dass der Drehgeber, d.h. die Leiterplatte mit dem zweiten Sensorelement, an dem Deckelelement gehalten ist bzw. sind. Bei herkömmlichen elektrischen Maschinen müssen jeweilige Achsenden der elektrischen Maschine für Anbaugeber-Durchmessergeometrien durch drehende Bearbeitung oder Aufschraubelemente angepasst werden, um eine Kopplung zum Anbaugeber herzustellen. Somit unterscheiden sich elektrische Maschinen mit und ohne Drehgeber in ihren Bearbeitungsschritten, insbesondere hinsichtlich einer Welle bzw. eines Wellenendes des Rotors. Auch diese Probleme können bei der erfindungsgemäßen elektrischen Maschine vermieden werden, sodass durch die Integration des Drehgebers in das Deckelelement auf besonders einfache Weise wenigstens zwei unterschiedliche Bauvarianten der elektrischen Maschine auf einfache und kostengünstige Weise realisiert werden können. Eine erste der Bauvarianten ist mit der Erfassungseinrichtung ausgerüstet. Die zweite Bauvariante ist nicht mit der Erfassungseinrichtung ausgerüstet, sodass die zweite Bauvariante die Leiterplatte mit dem zweiten Sensorelement und das erste Sensorelement nicht aufweist. Bei beiden Bauvarianten kann jedoch das gleiche bzw. identische Deckelelement verwendet werden, sodass eine große Gleichteileanzahl dargestellt werden kann. Dadurch können die Bauvarianten besonders kostengünstig realisiert werden.

Insbesondere ist es dabei vorzugsweise vorgesehen, dass die Leiterplatte mit dem zweiten Sensorelement reversibel lösbar an dem Deckelelement gehalten ist. Unter dieser reversibel lösbaren Halterung ist zu verstehen, dass die Leiterplatte an dem Deckelelement befestigt und wieder von dem Deckelelement gelöst werden kann, ohne dass es zu Beschädigungen des Deckelelements oder der Leiterplatte kommt. Hierdurch ist es möglich, das Deckelelement und somit die elektrische Maschine insgesamt auf einfache Weise mit der Erfassungseinrichtung auszustatten, oder auf einfache Weise die Erfassungseinrichtung einfach wegzulassen, sodass die zuvor beschriebenen Bauvarianten auf einfache und kostengünstige Weise realisiert werden können.

Im Vergleich zu Sonderlösungen, bei welchen ein jeweiliger Anbaugeber in einen verlängerten Maschinenraum eingebracht ist, um mechanische Einwirkungen auf den Geber zu vermeiden bzw. um diesen zu verstecken, bietet die erfindungsgemäße elektrische Maschine Bauraum- und Kostenvorteile, da die jeweilige zuvor genannte Sonderlösung als Umverpackungslösung weder Kosten noch Montageaufwand vermeidet oder Platz einspart und lediglich auf Anbaugebern basiert, welche eigengelagert, kostenintensiv und montageaufwendig sind. Zur Lösung des herkömmlicherweise auftretenden Bauraumproblems unter den genannten Randbedingungen bezüglich der Montagetoleranz und des Einsatzes bei Maschinenanlauf bzw. unter dem Aspekt des bestmöglichen Schutzes gegen äußere Einflüsse ist es somit erfindungsgemäß vorgesehen, dass die Leiterplatte an dem Deckelelement gehalten und insbesondere in das Deckelelement integriert ist.

Um die Kosten, den Bauraumbedarf und das Gewicht besonders gering halten zu können, ist das Deckelelement vorzugsweise aus einem Kunststoff gebildet.

In weiterer Ausgestaltung der Erfindung ist es vorgesehen, dass das Deckelelement durch Spritzgießen hergestellt ist. Hierdurch kann das Deckelelement besonders kostengünstig hergestellt werden.

Um die Leiterplatte dabei auf besonders kosten- und gewichtsgünstige Weise an dem Deckelelement zu halten und insbesondere in das Deckelelement zu integrieren, ist es bei einer weiteren vorteilhaften Ausführungsform der Erfindung vorgesehen, dass das Deckelelement an die Leiterplatte angespritzt ist. Mit anderen Worten ist beispielsweise zumindest ein Teilbereich der Leiterplatte von dem Deckelelement bzw. von dem Kunststoff des Deckelelements umspritzt, wodurch die Leiterplatte an dem Deckelelement gehalten ist. Hierbei ist das Deckelelement beispielsweise direkt an die Leiterplatte angespritzt und somit direkt mit der Leiterplatte verbunden.

Alternativ ist es denkbar, dass die Leiterplatte an einem Zwischenbauteil gehalten ist, welches, insbesondere reversibel lösbar, an dem Deckelelement gehalten, insbesondere mit dem Deckelelement verschraubt, ist. Somit ist die Leiterplatte unter Vermittlung des Zwischenbauteils an dem Deckelelement gehalten. Dabei ist es denkbar, dass das Zwischenbauteil aus einem Kunststoff gebildet und vorzugsweise durch Spritzgießen hergestellt ist. Vorzugsweise ist dabei das Zwischenbauteil, insbesondere direkt, an die Leiterplatte angespritzt und dadurch mit der Leiterplatte verbunden. Die Leiterplatte ist somit beispielsweise direkt mit dem Zwischenbauteil verbunden und unter Vermittlung des Zwischenbauteils, insbesondere reversibel lösbar, an dem Deckelelement gehalten. Beispielsweise ist die Leiterplatte zumindest teilweise in das Zwischenbauteil, insbesondere in dessen Kunststoff, eingebettet und dadurch mit dem Zwischenbauteil verbunden.

Beispielsweise weist das Zwischenbauteil eine als Aufnahme fungierende Ausnehmung auf, welche als Durchgangsöffnung ausgebildet sein kann. Dabei ist beispielsweise die Leiterplatte zumindest teilweise, insbesondere zumindest überwiegend oder vollständig, in der Aufnahme aufgenommen. Dabei ist es insbesondere denkbar, dass die Leiterplatte zumindest teilweise in die Ausnehmung eingesteckt und beispielsweise dadurch mit dem Zwischenbauteil verbunden ist.

Eine weitere Ausführungsform zeichnet sich dadurch aus, dass das Deckelelement aus einem metallischen Werkstoff und/oder aus einem ferromagnetischen Werkstoff gebildet ist, wodurch beispielsweise die Erfassungseinrichtung, insbesondere elektromagnetisch, vorteilhaft abgeschirmt werden kann. Dadurch können bzw. kann die Drehstellungen bzw. die Drehzahl besonders vorteilhaft erfasst werden.

Um die Leiterplatte besonders einfach und somit kostengünstig an dem Deckelelement zu haltern, ist es bei einer weiteren Ausführungsform der Erfindung vorgesehen, dass die Leiterplatte zumindest teilweise, insbesondere zumindest überwiegend oder vollständig, in einer Ausnehmung des Deckelelements aufgenommen ist. Die Ausnehmung fungiert somit als Aufnahme zum zumindest teilweisen Aufnehmen der Leiterplatte, wobei die Aufnahme beispielsweise durch das zuvor genannte Spritzgießen hergestellt und beispielsweise in axialer Richtung hinter dem Rotor bzw. auf den Rotor folgend angeordnet ist. Ferner ist es denkbar, dass das Zwischenbauteil zumindest teilweise, insbesondere zumindest überwiegend oder vollständig, in der Ausnehmung des Deckelelements aufgenommen ist. Insbesondere ist das Zwischenbauteil beispielsweise in die Ausnehmung des Deckelelements eingesteckt und dadurch beispielsweise mit dem Deckelelement verbunden.

Eine weitere Ausführungsform zeichnet sich dadurch aus, dass die Leiterplatte in die Ausnehmung eingesteckt und beispielsweise dadurch mit dem Deckelelement verbunden bzw. an dem Deckelelement gehalten ist. Dadurch können das Deckelelement und somit die elektrische Maschine insgesamt auf besonders einfache und kostengünstige Weise mit dem Drehgeber ausgestattet werden, oder der Drehgeber kann einfach weggelassen werden, sodass die zuvor beschriebenen Bauvarianten auf einfache Weise dargestellt werden können.

Alternativ oder zusätzlich ist es vorgesehen, dass die Leiterplatte mittels wenigstens einer Schraubverbindung an dem Deckelelement, insbesondere reversibel lösbar, gehalten ist. Hierbei fungiert beispielsweise die Aufnahme bzw. Ausnehmung des Deckelelements als Schraubaufnahme bzw. Einschraubaufnahme, da beispielsweise die Leiterplatte und/oder das Zwischenbauteil in der Aufnahme des Deckelements mit dem Deckelelement verschraubt und dadurch an dem Deckelelement gehalten ist.

Insbesondere ist es vorzugsweise vorgesehen, dass die Leiterplatte direkt an dem Deckelelement gehalten bzw. abgestützt ist. Ferner ist es denkbar, dass das separat von dem Deckelelement ausgebildete Zwischenbauteil vorgesehen ist, an welchem die Leiterplatte gehalten ist, wobei die Leiterplatte unter Vermittlung des Zwischenbauteils an dem Deckelelement gehalten ist. Das Zwischenbauteil ist beispielsweise, insbesondere reversibel lösbar, an dem Deckelelement gehalten. Dabei ist es denkbar, dass beispielsweise die Leiterplatte in das Zwischenbauteil eingebettet ist bzw. dass das Zwischenbauteil aus einem Kunststoff und dabei durch Spritzgießen hergestellt ist, wobei beispielsweise das Zwischenbauteil an die Leiterplatte angespritzt und dadurch mit der Leiterplatte verbunden ist. Das Zwischenbauteil und die Leiterplatte bilden somit beispielsweise ein Modul, welches, insbesondere reversibel lösbar, an dem Deckelelement gehalten ist. Dabei ist beispielsweise das Modul mittels wenigstens einer Schraubverbindung an dem Deckelelement gehalten. Auf diese Weise ist es besonders einfach möglich, das Deckelelement und somit die elektrische Maschine insgesamt mit dem Modul und somit mit dem Drehgeber auszustatten, oder das Modul kann einfach weggelassen werden, um dadurch die zuvor genannte Bauvariante ohne Drehgeber zu realisieren. Ist die elektrische Maschine nicht mit dem Drehgeber ausgestattet, so ist die elektrische Maschine als geberlose Maschine ausgebildet, wobei das gleiche, beispielsweise als Lagergehäusedeckel ausgebildete Deckelelement sowie das gleiche Achsende, insbesondere des Rotors, verwendet werden können.

Die elektrische Maschine ist beispielsweise in einem Motorbetrieb und somit als Elektromotor betreibbar. Während des Motorbetriebs wird der Rotor von dem Stator angetrieben, sodass die elektrische Maschine über den Rotor Drehmomente bereitstellen kann. Insbesondere ist es denkbar, dass die erfindungsgemäße elektrische Maschine als Traktionsmaschine für ein Kraftfahrzeug ausgebildet ist, welches mittels der elektrischen Maschine, insbesondere in dem Motorbetrieb, antreibbar ist. Dabei ist beispielsweise das Kraftfahrzeug als Elektrofahrzeug oder als Hybridfahrzeug ausgebildet und mittels der elektrischen Maschine antreibbar.

Eine weitere Ausführungsform zeichnet sich dadurch aus, dass wenigstens ein in dem Aufnahmeraum aufgenommenes und beispielsweise mit dem Rotor mitdrehbares, insbesondere von dem Rotor antreibbares, Lüfterrad vorgesehen ist, mittels welchem ein Kühlluftstrom zum Kühlen zumindest eines Teilbereichs der elektrischen Maschine zu fördern ist. Dabei ist das Deckelelement als Lüfterdeckel ausgebildet und weist wenigstens eine Durchgangsöffnung, insbesondere eine Mehrzahl von Durchgangsöffnungen, für Luft auf, welche beispielsweise den Kühlluftstrom bildet.

Mit anderen Worten, wird das Lüfterrad angetrieben, so dass sich das Lüfterrad beispielsweise um die Drehachse relativ zu dem Deckelelement und relativ zu dem Maschinengehäuse dreht, so wird mittels des Lüfterrads Luft, beispielsweise durch die Durchgangsöffnung des Deckelelements hindurch, gefördert, woraus der Kühlluftstrom resultiert. Bei dieser Ausführungsform kommt dem Aufnahmeraum zumindest eine Doppelfunktion zu, da der Aufnahmeraum zum einen dazu genutzt wird, die Erfassungseinrichtung bzw. die Sensorelemente und die Leiterplatte aufzunehmen. Zum anderen wird der Aufnahmeraum dazu genutzt, um das Lüfterrad aufzunehmen. Mittels des Lüfterrads kann beispielsweise über die Durchgangsöffnung des Deckelelements Luft aus der Umgebung des Deckelelements angesaugt und durch die Durchgangsöffnung hindurchgefördert werden, woraus der genannte Kühlluftstrom resultiert. Mittels des Kühlluftstroms kann zumindest der Teilbereich der elektrischen Maschine gekühlt werden. Durch die zuvor genannte Doppelfunktion können die Teileanzahl und somit die Kosten, das Gewicht und der Bauraumbedarf der elektrischen Maschine besonders gering gehalten werden.

Um dabei eine besonders einfache und kostengünstige Montage des Drehgebers sowie des Lüfterrads zu realisieren, ist es in weiterer Ausgestaltung der Erfindung vorgesehen, dass das Lüfterrad in axialer Richtung des Rotors zwischen der Leiterplatte und einer den Aufnahmeraum in axialer Richtung des Rotors zumindest teilweise, insbesondere zumindest überwiegend, begrenzenden Stirnseite des Deckelelements angeordnet ist.

Bei dieser Ausführungsform ist das Lüfterrad beispielsweise Bestandteil eines Lüfters, insbesondere eines Fremdlüfters, welcher beispielsweise mit dem Drehgeber und dem Deckelelement ein Modulteil bildet, das auf besonders einfache Weise montiert werden kann. Hierzu wird beispielsweise das Deckelelement einfach an dem Maschinengehäuse befestigt. Das Modulteil umfasst beispielsweise einen von dem Stator und dem Rotor unterschiedlichen Motor, insbesondere einen Elektromotor, mittels welchem das Lüfterrad antreibbar ist. Dabei gehört der Elektromotor zu dem genannten Lüfter. Durch die beschriebene Anordnung des Lüfterrads in axialer Richtung zwischen der Stirnseite und der Leiterplatte bzw. dem Drehgeber können bzw. kann auch bei Verwendung eines solchen Fremdlüfters die Drehstellungen bzw. die Drehzahl des Rotors einfach und präzise erfasst werden.

Um den Bauraumbedarf, insbesondere in axialer Richtung des Rotors bzw. der elektrischen Maschine insgesamt, besonders gering halten zu können, sind bei einer weiteren Ausführungsform der Erfindung das erste Sensorelement und die Leiterplatte zumindest teilweise, insbesondere zumindest überwiegend oder vollständig, in einer Welle des Rotors aufgenommen. Darunter ist insbesondere zu verstehen, dass das erste Sensorelement und die Leiterplatte in radialer Richtung des Rotors nach außen hin zumindest teilweise, insbesondere zumindest überwiegend oder vollständig, durch die Welle überdeckt sind. Hierzu weist die Welle beispielsweise eine Wellenaufnahme auf, in welcher die Leiterplatte und das erste Sensorelement zumindest teilweise angeordnet sind.

In weiterer Ausgestaltung der Erfindung verläuft innerhalb einer Wandung des Deckelelements wenigstens eine elektrisch mit der Leiterplatte und elektrisch mit wenigstens einem weiteren Bauelement der elektrischen Maschine verbundene Leitung, wodurch der Bauraumbedarf der elektrischen Maschine besonders gering gehalten werden kann. Das zuvor genannte, die erfassten Drehstellungen bzw. Drehzahl charakterisierende Signal kann beispielsweise von der Leiterplatte an die Leitung übertragen und mittels der Leitung geführt werden. Alternativ oder zusätzlich ist es denkbar, dass die Leiterplatte bzw. der Drehgeber mittels der Leitung mit elektrischer Energie, insbesondere mit elektrischem Strom, versorgbar ist.

Um die Kosten der elektrischen Maschine besonders gering zu halten, ist es in weiterer Ausgestaltung der Erfindung vorgesehen, dass das Deckelelement reversibel lösbar an dem Maschinengehäuse gehalten ist. Dadurch können das Deckelelement und mit diesem die Leiterplatte bzw. der Drehgeber insgesamt auf besonders einfache Weise montiert sowie demontiert werden. Unter der reversibel lösbaren Halterung ist insbesondere zu verstehen, dass das Deckelelement mit dem Maschinengehäuse verbunden und wieder von dem Maschinengehäuse gelöst werden kann, ohne dass es zu Beschädigungen bzw. zu einer Zerstörung des Deckelelements oder des Maschinengehäuses kommt.

Schließlich hat es sich als besonders vorteilhaft gezeigt, wenn das erste Sensorelement als ein Magnet, insbesondere als ein Permanentmagnet und vorzugsweise als ein Diametralmagnet oder Multipolmagnet, ausgebildet ist. Alternativ oder zusätzlich ist das Sensorelement als magnetoresistiver Drehwinkelsensor ausgebildet. Hierdurch können bzw. kann die Drehstellungen bzw. die Drehzahl magnetisch und somit besonders präzise erfasst werden. Dabei verschwindet der Geber quasi in dem beispielsweise als Lüftergehäuse fungierenden Deckelelement, so dass durch Verwendung des Drehgebers im Vergleich zu der Bauvariante, die nicht mit dem Drehgeber ausgestattet ist, kein zusätzlicher Bauraumbedarf bewirkt wird.

Beispielsweise ist durch das Deckelelement ein Gehäuse, d.h. ein Gebergehäuse, gebildet, wobei das Gebergehäuse einstückig mit dem Deckelelement ausgebildet ist. Dabei sind das Deckelelement und somit das Gebergehäuse beispielsweise durch Spritzgießen bzw. Spritzguss hergestellt. Der Drehgeber, d.h. die Leiterplatte mit dem zweiten Sensorelement, ist zumindest teilweise, insbesondere zumindest überwiegend oder vollständig, in dem Gebergehäuse angeordnet. Dabei ist es denkbar, dass die Leiterplatte mit einem Schutzlack oder einer Vergussmasse, insbesondere einer Silikon-Vergussmasse, versehen ist, sodass der Schutzlack bzw. die Vergussmasse den Drehgeber bzw. die Leiterplatte zumindest teilweise, insbesondere zumindest überwiegend oder vollständig, überdeckt, insbesondere zumindest in solchen Teilbereichen, welche überdeckungsfrei zu dem Gebergehäuse angeordnet sind. Mittels eines solchen Schutzlacks bzw. mittels einer solchen Vergussmasse kann die Leiterplatte hinreichend und kosteneffektiv geschützt werden.

Ferner ist es möglich, den in das Deckelelement integrierten Geber vollständig galvanisch von der übrigen elektrischen Maschine zu trennen, insbesondere bei geeignet gekoppelter Leitungsführung für die elektrische Versorgung und Sensorsignale. Außerdem kann durch die beschriebene Integration des Drehgebers in das beispielsweise als Lüfterdeckel ausgebildete Deckelelement eine Demontage des Drehgebers von außen vermieden werden, sodass beispielsweise ein Diebstahl vermieden werden kann. Ferner kann eine herkömmlicherweise zum Einsatz kommende Werks-Justage des Drehgebers zumindest weitestgehend entfallen, da beispielsweise das Deckelelement mit dem Maschinengehäuse verrastet wird. Hierfür sind beispielsweise Rastelemente wie beispielsweise Schnappnasen und/oder andere Rastelemente vorgesehen, mittels welchen das Deckelelement mit dem Maschinengehäuse verrastet wird. Bei den Schnappnasen bzw. Rastelementen handelt es sich somit um Befestigungselemente, mittels welchen das Deckelelement, insbesondere reversibel lösbar, an dem Maschinengehäuse befestigt wird. Alternativ oder zusätzlich kann es sich bei den Befestigungselementen um Schraublöcher bzw. Schrauböffnungen handeln, mittels welchen das Deckelelement, insbesondere reversibel lösbar, mit dem Maschinengehäuse verschraubt und dadurch an dem Maschinengehäuse befestigt wird.

Mittels der Befestigungselemente zum Befestigen des Deckelelements an dem Maschinengehäuse kann eine ausreichend präzise Ausrichtung des Deckelelements und somit des an dem Deckelelement gehaltenen Drehgebers relativ zu dem Maschinengehäuse bzw. relativ zu dem Stator und/oder dem Rotor realisiert werden, sodass eine drehstabile Anbringung von weniger als einem Grad durch Verrasten bzw. Aufschnappen oder Anschrauben des Deckelelements an das Maschinengehäuse gewährleistet werden kann. Da die auch als Geber-Platine bezeichnete Leiterplatte an dem Deckelelement gehalten bzw. in das Deckelelement integriert ist, kann durch Aufschnappen bzw. Anschrauben oder Verrasten auch eine hinreichende Ausrichtung bzw. Justage des Drehgebers relativ zu dem Stator bzw. relativ zum Rotor gewährleistet werden, wobei vorzugsweise vorgesehen ist, dass die Leiterplatte drehstabil an dem Deckelelement gehalten, d.h. drehfest mit dem Deckelelement verbunden ist. Dadurch können Relativdrehungen zwischen der Leiterplatte und dem Deckelelement sowie Relativdrehungen zwischen der Leiterplatte und dem Maschinengehäuse vermieden werden.

Dabei ist es insbesondere vorgesehen, dass die Leiterplatte und/oder das Zwischenbauteil drehstabil in die zuvor genannte Aufnahme bzw. Ausnehmung geschraubt ist. Bei Bedarf kann das beispielsweise als Lüfterdeckel ausgebildete Deckelelement aus einem metallischen oder ferromagnetischen Material gebildet sein, um einen hinreichenden EMV-Schutz zu realisieren (EMV - elektromagnetische Verträglichkeit).

Der Erfindung liegt ferner die Erkenntnis zugrunde, dass sich optische Prinzipien zur Drehstellungs- bzw. Drehzahlerfassung bis auf wenige Ausnahmen nicht vorteilhaft als Einbaukit integrieren lassen, da Anforderungen an solche optische Mess-Aufnehmer zur Maßverkörperung so hoch sind, sodass spezielle Fertigungsvorgänge erforderlich sind. Dies kann erfindungsgemäß insbesondere dadurch vermieden werden, dass die Drehstellungen bzw. die Drehzahl mittels des Drehgebers magnetisch erfassbar sind bzw. ist.

Ein zweiter Aspekt der Erfindung betrifft ein Verfahren zum Betreiben einer elektrischen Maschine, insbesondere einer erfindungsgemäßen elektrischen Maschine, mit einem Stator, mit einem um eine Drehachse relativ zu dem Stator drehbaren Rotor, mit einem Maschinengehäuse, in welchem der Stator und der Rotor jeweils zumindest überwiegend aufgenommen sind, mit einem separat von dem Maschinengehäuse ausgebildeten und an dem Maschinengehäuse gehaltenen Deckelelement, mit einem Aufnahmeraum, welcher jeweils teilweise durch das Maschinengehäuse und durch das Deckelelement begrenzt ist, und mit einer zum Erfassen von Drehstellungen und/oder einer Drehzahl des Rotors ausgebildeten Erfassungseinrichtung, welche wenigstens ein in dem Aufnahmeraum angeordnetes und mit dem Rotor mitdrehbares erstes Sensorelement und wenigstens eine in dem Aufnahmeraum angeordnete Leiterplatte mit zumindest einem zweiten Sensorelement aufweist, mittels welchem unter Zusammenwirken mit dem ersten Sensorelement die Drehstellungen und/oder die Drehzahl des Rotors erfasst werden bzw. wird.

Um die Drehstellungen bzw. die Drehzahl auf einfache, bauraum- und kostengünstige Weise sowie besonders präzise erfassen zu können, ist es erfindungsgemäß vorgesehen, dass als die Leiterplatte eine an dem Deckelelement gehaltene Leiterplatte verwendet wird. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Des Weiteren wurde gefunden, dass bei großen elektrischen Maschinen vermehrt Maschinenvibrationen auftreten. Dabei kann der in das Deckelelement integrierte Drehgeber, welcher sich beispielsweise in einer schwingfähigen Aufnahme befindet und dadurch Frequenzintervalle, welche durch mechanische Bewegung gegenüber dem beispielsweise als Messmagneten ausgebildeten ersten Sensorelement entstehen, verfälschte Lagewerte bzw. Drehzahlen ermitteln, was sich nachteilig auf Drehzahlsignale auswirken kann. Dies ist vorwiegend für laterale bzw. radiale Auslenkungen, bei bevorzugt einzusetzender magnetoresistiver Wirkweise des als Geber-Sensor fungierenden zweiten Sensorelements, weniger jedoch in axialer Richtung relevant. Jedoch ist dies relevant bei Hall-Magnetgebern, da eine Magnetfeldstärke gemessen wird, welche mit dem aktuellen Abstand abnimmt.

Durch Kenntnis aus der Konstruktion des Deckelelements und/oder durch Beschleunigungs- bzw. Auslenkungsmessungen der Leiterplatte mittels Bestückung der Leiterplatte mit wenigstens einem Beschleunigungssensor, welcher beispielsweise als Sensor-IC, d.h. als Drei-Achs-Beschleunigungssensor, ausgebildet ist, kann die aktuelle Auslenkung der Leiterplatte und somit einer Elektronik des Drehgebers insgesamt bei aktueller Drehzahl des Rotors ermittelt werden und in einer weiteren Ausgestaltung der Erfindung zur Korrektur der mittels des Drehgebers erfassten Drehstellung bzw. Drehzahl Verwendung finden, insbesondere derart, dass Nachteile der Anbringung des Drehgebers am schwingenden Deckelelement gegenüber einem herkömmlicherweise zum Einsatz kommenden Anbau mit Kupplung oder starrer Achskopplung aus dem zuvor genannten Signal herausgerechnet werden.

Das zuvor genannte Signal wird auch als Gebersignal oder Sensorsignal bezeichnet, da es die mittels des Drehgebers erfassten Drehstellungen bzw. Drehzahl charakterisiert. Das die erfassten Drehstellungen bzw. Drehzahl charakterisierende und von dem Drehgeber bereitgestellte Signal kann nun in Abhängigkeit von den beispielsweise erfassten Auslenkungen der Leiterplatte korrigiert werden, um dadurch die tatsächliche Drehstellung bzw. Drehzahl des Rotors besonders präzise zu ermitteln. Dabei werden die Auslenkungen mittels des Beschleunigungssensors erfasst. Ist beispielsweise die aktuelle Position des Drehgebers gegen die Drehachse verschoben, so können Fehler wie bei exzentrischer Montierung auftreten. Eine Exzentrizität kann in erster Näherung als ein sinusartiger Fehler pro Umdrehung erscheinen. Hierbei kann mithilfe von statistischer Korrektur der mittlere Fehler zur Sinus-Abweichung ermittelt werden und beispielsweise aus dem Signal entfernt werden, um die Drehstellung bzw. die Drehzahl auf einfache Weise präzise zu erfassen.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- FIG 1: eine schematische und teilweise geschnittene Seitenansicht einer ersten Ausführungsform einer erfindungsgemäßen elektrischen Maschine, bei welcher eine Leiterplatte einer Erfassungseinrichtung an einem Deckelelement gehalten ist;
- FIG 2: eine schematische und teilweise geschnittene Seitenansicht der elektrischen Maschine gemäß einer zweiten Ausführungsform;
- FIG 3: ausschnittsweise eine schematische Perspektivansicht des Deckelelements und einer Welle eines Rotors der elektrischen Maschine gemäß einer dritten Ausführungsform;
- FIG 4: ausschnittsweise eine schematische Perspektivansicht des Deckelelements gemäß der dritten Ausführungsform;
- FIG 5: eine schematische Perspektivansicht eines Zwischenbauteils der elektrischen Maschine gemäß der dritten Ausführungsform;
- FIG 6: ausschnittsweise eine weitere schematische Perspektivansicht des Deckelelements gemäß der dritten Ausführungsform;
- FIG 7: eine schematische und teilweise geschnittene Seitenansicht der elektrischen Maschine gemäß einer vierten Ausführungsform;
- FIG 8: eine schematische und geschnittene Seitenansicht des Deckelelements gemäß einer fünften Ausführungsform;
- FIG 9: eine schematische und geschnittene Seitenansicht des Deckelelements gemäß einer sechsten Ausführungsform;
- FIG 10: eine schematische und geschnittene Seitenansicht des Deckelelements gemäß einer siebten Ausführungsform;
- FIG 11: eine schematische und geschnittene Seitenansicht des Deckelelements gemäß einer achten Ausführungsform;
- FIG 12: ausschnittsweise eine schematische und perspektivische Explosionsansicht der elektrischen Maschine gemäß der achten Ausführungsform;

- FIG 13: ausschnittsweise eine weitere schematische und perspektivische Explosionsansicht der elektrischen Maschine gemäß der achten Ausführungsform;
- FIG 14: eine schematische und teilweise geschnittene Seitenansicht der elektrischen Maschine gemäß einer neunten Ausführungsform;
- FIG 15: eine schematische und teilweise geschnittene Seitenansicht der elektrischen Maschine gemäß einer zehnten Ausführungsform;
- FIG 16: ein Diagramm zum Veranschaulichen eines Verfahrens zum Betreiben der elektrischen Maschine; und
- FIG 17: ein weiteres Diagramm zum Veranschaulichen des Verfahrens zum Betreiben der elektrischen Maschine.

In den FIG sind gleiche oder funktionsgleiche Elemente mit gleichen Bezugszeichen versehen.

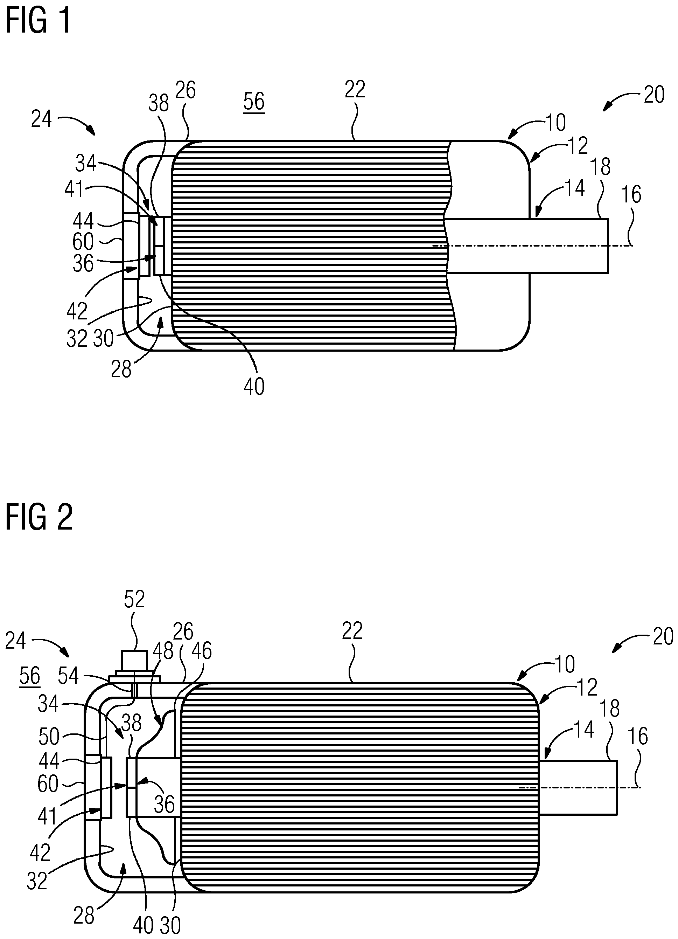

FIG 1 zeigt in einer schematischen und teilweise geschnittenen Seitenansicht eine im Ganzen mit 10 bezeichnete elektrische Maschine, insbesondere für ein Kraftfahrzeug, das beispielsweise als Elektro- oder Hybridfahrzeug ausgebildet und mittels der elektrischen Maschine 10 antreibbar ist. Die elektrische Maschine 10 umfasst einen in FIG 1 teilweise erkennbaren Stator 12 sowie einen Rotor 14, welcher um eine Drehachse 16 relativ zu dem Stator 12 drehbar ist. Dabei zeigt FIG 1 eine erste Ausführungsform der elektrischen Maschine 10. Die elektrische Maschine 10 ist beispielsweise in einem Motorbetrieb und somit als Elektromotor betreibbar. In dem Motorbetrieb wird der Rotor 14 von dem Stator 12 angetrieben und dadurch um die Drehachse 16 relativ zu dem Stator 12 gedreht. Somit kann die elektrische Maschine 10 im Motorbetrieb beispielsweise Drehmomente bereitstellen, mittels welchen wenigstens ein Rad des Kraftfahrzeugs bzw. das Kraftfahrzeug insgesamt angetrieben werden kann.

Der Rotor 14 umfasst dabei wenigstens eine Welle 18, welche auch als Rotorwelle bezeichnet wird. Beispielsweise kann die elektrische Maschine 10 die genannten Drehmomente über die Welle 18 bereitstellen, insbesondere auf einer Abtriebsseite 20, welche auch als A-Seite der elektrischen Maschine 10 bezeichnet wird.

Dabei umfasst der Rotor 14 beispielsweise wenigstens einen insbesondere als Permanentmagnet ausgebildeten Magneten, welcher beispielsweise Drehfest mit der Welle 18 verbunden ist. Insbesondere kann der Rotor 14 wenigstens ein in FIG 1 nicht erkennbares Blechpaket aufweisen, welches beispielsweise auf der Welle 18 angeordnet und drehfest mit der Welle 18 verbunden ist. Dabei weist das Blechpaket beispielsweise wenigstens eine Tasche auf, in welcher der zuvor genannte Magnet zumindest teilweise, insbesondere zumindest überwiegend oder vollständig, aufgenommen ist. Alternativ oder zusätzlich kann der Stator 12 wenigstens eine Wicklung oder eine Mehrzahl von Wicklungen aufweisen, welche insbesondere von elektrischem Strom durchströmt werden können.

Die elektrische Maschine 10 weist ferner ein auch als Motorgehäuse bezeichnetes Maschinengehäuse 22 auf, wobei der Stator 12 und der Rotor 14 jeweils zumindest überwiegend in dem Maschinengehäuse 22 aufgenommen sind. Dabei ist insbesondere der Stator 12 zumindest überwiegend, insbesondere zumindest vollständig, in dem Maschinengehäuse 22 aufgenommen. Der Rotor 14 und somit die Welle 18 können sich somit um die Drehachse 16 relativ zu dem Maschinengehäuse 22 und relativ zu dem Stator 12 drehen, wobei die Welle 18 insbesondere auf der Abtriebsseite 20 aus dem Maschinengehäuse 22 beispielsweise herausragt. In axialer Richtung des Rotors 14 und somit der elektrischen Maschine 10 insgesamt liegt der Abtriebsseite 20 eine Nicht-Abtriebsseite 24 gegenüber, welche auch als B-Seite der elektrischen Maschine 10 bezeichnet wird.

Die elektrische Maschine 10 umfasst ferner ein separat von dem Maschinengehäuse 22 ausgebildetes und an dem Maschinengehäuse 22 gehaltenes bzw. befestigtes Deckelelement 26. Insgesamt ist erkennbar, dass das Maschinengehäuse 22 und das Deckelelement 26 nicht etwa einstückig miteinander ausgebildet sind, sondern das Maschinengehäuse 22 und das einfach auch als Deckel bezeichnete Deckelelement 26 sind separat voneinander hergestellte und miteinander verbundene Einzelbauteile der elektrischen Maschine 10.

Die elektrische Maschine 10 weist ferner einen Aufnahmeraum 28 auf, welcher jeweils teilweise durch das Maschinengehäuse 22 und durch das Deckelelement 26 begrenzt ist. Zur Abtriebsseite 20 hin ist der Aufnahmeraum 28 in axialer Richtung des Rotors 14 durch eine axiale Stirnseite 30 des Maschinengehäuses 22 zumindest teilweise, insbesondere zumindest überwiegend, begrenzt. Zur Nicht-Abtriebsseite 24 hin ist der Aufnahmeraum 28 in axialer Richtung des Rotors 14 durch eine axiale Stirnseite 32 des Deckelelements 26 zumindest teilweise, insbesondere zumindest überwiegend oder vollständig, begrenzt, sodass die Stirnseiten 30 und 32 in axialer Richtung des Rotors 14 bzw. der elektrischen Maschine 10 insgesamt einander gegenüberliegen. In radialer Richtung des Rotors 14 und somit der elektrischen Maschine 10 insgesamt nach außen hin ist der Aufnahmeraum 28, insbesondere zumindest überwiegend oder vollständig, durch das Deckelelement 26 begrenzt.

Außerdem weist die elektrische Maschine 10 eine Erfassungseinrichtung 34 auf, welche zum Erfassen von Drehstellungen und/oder einer Drehzahl des Rotors 14 ausgebildet ist. Der besseren Lesbarkeit wegen wird im Folgenden lediglich Bezug genommen auf die mittels der Erfassungseinrichtung 34 erfassbare Drehstellungen des Rotors 14, wobei es selbstverständlich ist, dass die vorigen und folgenden Ausführungen ohne weiteres auf die Erfassung der Drehzahl des Rotors 14 übertragen werden können und umgekehrt. Durch das Erfassen der Drehstellungen bzw. der Drehzahl ist beispielsweise eine Drehzahl-, Momenten- und/oder Lageregelung der elektrischen Maschine 10 realisierbar. Die Erfassung der Drehstellungen wird auch als Drehstellungserfassung oder Drehwinkelerfassung bezeichnet, wobei üblicherweise die jeweilige Drehstellung auch als Drehwinkel oder Winkellage bezeichnet wird.

Die Erfassungseinrichtung 34 weist dabei wenigstens ein in dem Aufnahmeraum 28 aufgenommenes bzw. angeordnetes erstes Sensorelement 36 auf, welches mit dem Rotor 14, insbesondere mit der Welle 18, mitdrehbar ist. Dabei ist das erste Sensorelement 36 drehfest mit dem Rotor 14, insbesondere mit der Welle 18, verbunden, sodass das Sensorelement 36 um die Drehachse 16 relativ zu dem Maschinengehäuse 22 und relativ zu dem Deckelelement 26 drehbar ist. Bei der in FIG 1 gezeigten ersten Ausführungsform ist das erste Sensorelement 36 als Magnet, insbesondere als Permanentmagnet, ausgebildet und weist wenigstens zwei magnetische Pole 38 und 40 auf. Bei der ersten Ausführungsform ist das als Magnet ausgebildete erste Sensorelement 36 als Diametralmagnet, d.h. als diametralmagnetisierter Magnet ausgebildet, da die magnetischen Pole 38 und 40 diametral einander gegenüberliegen bzw. in radialer Richtung des Rotors 14 nebeneinander angeordnet sind. Insbesondere ist es denkbar, dass das als Magnet ausgebildete erste Sensorelement 36 als Multipolmagnet ausgebildet ist und dabei mehr als zwei magnetische Pole aufweist. Mit anderen Worten weist der Magnet vorzugsweise wenigstens ein Polpaar 41 auf, welches die magnetischen Pole 38 und 40 umfasst. Insbesondere ist es denkbar, dass der Magnet mehrere Polpaare aufweist.

Das vorliegend als Magnet, insbesondere als Permanentmagnet, ausgebildete erste Sensorelement 36 ist somit dazu ausgebildet, magnetische Kräfte, d.h. Magnetkräfte, bereitzustellen, anhand derer die Drehstellungen bzw. die Drehzahl des Rotors 14 erfasst werden können bzw. kann.

Hierzu umfasst die Erfassungseinrichtung 34 wenigstens eine in dem Aufnahmeraum 28 angeordnete Leiterplatte 42 mit zumindest einem zweiten Sensorelement 44, welches vorzugsweise als magnetoresistiver Sensor, insbesondere Drehwinkelsensor, ausgebildet ist. Das zweite Sensorelement 44 ist beispielsweise dazu ausgebildet, die von dem ersten Sensorelement 36 bereitgestellten Magnetkräfte zu erfassen, um dadurch die Drehstellungen des Rotors 14 zu erfassen. Da das Sensorelement 36 drehfest mit dem Rotor 14, insbesondere mit der Welle 18, verbunden ist, korrespondieren die jeweiligen Drehstellungen des Rotors 14 mit jeweiligen Drehstellungen des Sensorelements 36. Anhand der von dem Sensorelement 36 bereitgestellten magnetischen Kräfte können die jeweiligen Drehstellungen des Sensorelements 36 mittels des Sensorelements 44 erfasst werden, sodass anhand der erfassten Drehstellungen des Sensorelements 36 die Drehstellungen des Rotors 14 erfasst werden können. Somit sind die Drehstellungen des Rotors 14 mittels des zweiten Sensorelements 44 unter Zusammenwirken mit dem ersten Sensorelement 36 erfassbar. Unter dem Zusammenwirken des Sensorelements 44 mit dem Sensorelement 36 ist insbesondere zu verstehen, dass die von dem Sensorelement 36 bereitgestellten magnetischen Kräfte mittels des Sensorelements 44 erfasst werden.

Um nun die Drehstellung des Rotors 14 auf besonders bauraum-und kostengünstige Weise sowie besonders präzise erfassen zu können, ist die auch als Platine, Leiterkarte oder gedruckte Schaltung bzw. PCB bezeichnete Leiterplatte 42 mit dem zweiten Sensorelement 44 an dem Deckelelement 26 gehalten. Die Leiterplatte 42 mit dem zweiten Sensorelement 44 bildet beispielsweise einen Drehgeber oder ist Bestandteil eines solchen Drehgebers, welcher auch einfach als Geber bezeichnet wird. Mittels des Drehgebers können unter Erfassen der von dem Sensorelement 36 bereitgestellten magnetischen Kräfte die Drehstellungen des Rotors 14 auf die beschriebene Weise erfasst werden. Insbesondere ist der Drehgeber bzw. die Leiterplatte 42 dazu ausgebildet, wenigstens ein die erfassten Drehstellungen charakterisierendes und insbesondere elektrisches Signal bereitzustellen. In der Folge kann die elektrische Maschine 10 beispielsweise in Abhängigkeit von dem Signal und somit in Abhängigkeit von den erfassten Drehstellungen betrieben, insbesondere geregelt, werden. Vorzugsweise ist der Drehgeber drehfest mit dem Deckelelement 26 verbunden, welches wiederum drehfest mit dem Maschinengehäuse 22 verbunden ist. Dadurch können unerwünschte Relativdrehungen zwischen dem Drehgeber und dem Maschinengehäuse 22 bzw. zwischen dem Drehgeber und dem Stator 12 vermieden werden.

Durch die Halterung des Drehgebers an dem Deckelelement 26 wird der Drehgeber zusammen mit dem Deckelelement 26 an dem Maschinengehäuse 22 montiert und von diesem demontiert, sodass die elektrische Maschine 10 besonders einfach hergestellt werden kann. Dabei ist es vorzugsweise vorgesehen, dass das Deckelelement 26 reversibel lösbar an dem Maschinengehäuse 22 gehalten ist. Alternativ oder zusätzlich ist es denkbar, dass der Drehgeber, d.h. die Leiterplatte 42, reversibel lösbar an dem Deckelelement 26 gehalten ist, sodass die elektrische Maschine 10 auf einfache Weise mit dem Drehgeber bzw. mit der Erfassungseinrichtung 34 insgesamt ausgestattet werden kann, oder der Drehgeber bzw. die Erfassungseinrichtung 34 kann auf einfache und kostengünstige Weise einfach weggelassen werden.

Somit sind auf einfache und kostengünstige Weise wenigstens zwei voneinander unterschiedliche Bauvarianten der elektrischen Maschine 10 darstellbar. Bei einer ersten der Bauvarianten umfasst die elektrische Maschine 10 den Drehgeber bzw. die Erfassungseinrichtung 34. Bei der zweiten Bauvariante umfasst die elektrische Maschine 10 zumindest den Drehgeber bzw. die Erfassungseinrichtung 34 insgesamt nicht, wodurch die elektrische Maschine 10 als geberlose Maschine bzw. als geberloser Motor ausgebildet ist. Aufgrund der Halterung des Drehgebers an dem Deckelelement 26 kann für beide Bauvarianten das gleiche Deckelelement 26 genutzt werden, wodurch die Bauvarianten auf besonders kostengünstige Weise realisiert werden können.

FIG 2 zeigt eine zweite Ausführungsform der elektrischen Maschine 10. Bei der zweiten Ausführungsform umfasst die elektrische Maschine 10 ein in dem Aufnahmeraum 28 aufgenommenes Lüfterrad 46, welches, insbesondere um die Drehachse 16, relativ zu dem Maschinengehäuse 22 und relativ zu dem Deckelelement 26 drehbar ist. Bei der zweiten Ausführungsform ist das Lüfterrad 46 mit dem Rotor 14 mitdrehbar bzw. von dem Rotor 14 antreibbar und dadurch um die Drehachse 16 drehbar. Dabei ist das Lüfterrad 46 auf der Welle 18 angeordnet und beispielsweise drehfest mit der Welle 18 verbunden. Durch Antreiben des Lüfterrads 46, d.h. durch Drehen des Lüfterrads 46 um die Drehachse 16, wird mittels des Lüfterrads 46 Luft gefördert, welche einen Kühlluftstrom bildet. Mittels des Kühlluftstroms kann zumindest ein Teilbereich der elektrischen Maschine 10 effektiv gekühlt werden. Da bei der zweiten Ausführungsform das Lüfterrad 46 zum Einsatz kommt, ist bei der zweiten Ausführungsform das Deckelelement 26 als Lüfterdeckel ausgebildet, an welchem die Leiterplatte 42 gehalten ist. Da bei der ersten Ausführungsform das Lüfterrad 46 nicht zum Einsatz kommt, ist das Deckelelement 26 bei der ersten Ausführungsform lediglich als sogenannter Geberdeckel ausgebildet. Das Lüfterrad 46 ist beispielsweise Bestandteil eines im Ganzen mit 48 bezeichneten Lüfters, mittels welchem der Kühlluftstrom gefördert bzw. bewirkt werden kann.

Des Weiteren ist aus FIG 2 erkennbar, dass die elektrische Maschine 10 wenigstens eine Leitung 50 aufweist. Die Leitung 50 ist beispielsweise elektrisch mit der Leiterplatte 42 bzw. mit dem Drehgeber und elektrisch mit wenigstens einem weiteren Bauelement 52 der elektrischen Maschine 10 verbunden. Somit kann beispielsweise das zuvor genannte Signal von dem Drehgeber auf die Leitung 50 übertragen und mittels der Leitung 50, insbesondere zu dem Bauelement 52, geführt werden. Das Signal kann an das Bauelement 52 übertragen werden. Das Bauelement 52 ist beispielsweise eine Recheneinrichtung, welche das Signal empfängt und in der Folge die elektrische Maschine 10 in Abhängigkeit von dem Signal und somit in Abhängigkeit von den erfassten Drehstellungen betreibt. Ferner ist es denkbar, dass das Bauelement 52 eine Spannungs- bzw. Energiequelle ist, sodass die Leiterplatte 42 über die Leitung 50 und das Bauelement 52 mit elektrischer Energie bzw. mit elektrischem Strom versorgt werden kann. Dabei durchdringt die Leitung 50 beispielsweise wenigstens eine Durchgangsöffnung 54 des Deckelelements 26, sodass die Leitung 50 von dem Aufnahmeraum 28 durch die Durchgangsöffnung 54 hindurch an die Umgebung 56 des Deckelelements 26 geführt werden kann.

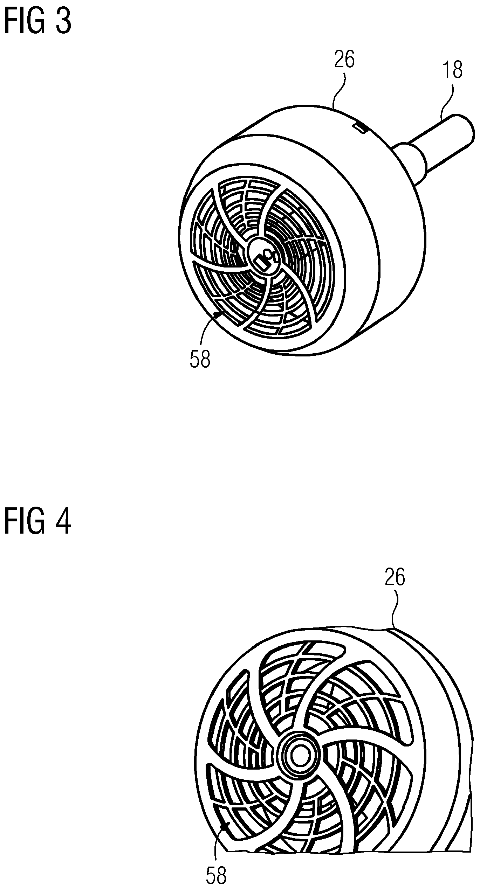

FIG 3 bis 6 veranschaulichen eine dritte Ausführungsform der elektrischen Maschine 10. Auch bei der dritten Ausführungsform ist das Deckelelement 26 als Lüfterdeckel ausgebildet. Dabei weist - wie besonders gut aus FIG 3, 4 und 6 erkennbar ist - das Deckelelement 26 eine Mehrzahl von Durchgangsöffnungen 58 auf, durch welche die zuvor genannte, mittels des Lüfterrads 46 zu fördernde bzw. geförderte Luft hindurchströmen kann. Somit ist es beispielsweise möglich, dass durch Drehen des Lüfterrads 46 und die Drehachse 16 mittels des Lüfterrads 46 Luft aus der Umgebung 56 durch die Durchgangsöffnungen 58 hindurch und in den Aufnahmeraum 28 gefördert werden kann, sodass die geförderte Luft den Kühlluftstrom bildet. Ferner ist es denkbar, dass die mittels des Lüfterrads 46 geförderte Luft über die Durchgangsöffnungen 58 aus dem Aufnahmeraum 28 herausgefördert wird und somit mittels des Lüfterrads 46 herausgeblasen wird.

Das Deckelelement 26 ist beispielsweise aus einem metallischen Werkstoff und/oder aus einem ferromagnetischen Material gebildet, um eine vorteilhafte elektromagnetische Abschirmung der Erfassungseinrichtung 34 realisieren zu können. Ferner ist es denkbar, dass das Deckelelement 26 aus einem Kunststoff gebildet und dabei insbesondere durch Spritzgießen hergestellt ist. Durch das Spritzgießen ist beispielsweise wenigstens eine einstückig mit dem Deckelelement 26 ausgebildete bzw. durch das Deckelelement 26 gebildete Aufnahme oder Ausnehmung gebildet, in welcher die Leiterplatte 42 zumindest teilweise, insbesondere zumindest überwiegend oder vollständig, aufgenommen ist. Dabei ist es denkbar, dass das Deckelelement 26 bzw. dessen Kunststoff an die Leierplatte 42 angespritzt ist, wodurch beispielsweise die Leiterplatte 42 an dem Deckelelement 26 direkt gehalten ist. Insbesondere ist hierbei die Leiterplatte 42 zumindest teilweise, insbesondere zumindest überwiegend oder vollständig, in das Deckelelement 26, insbesondere in eine Wandung 60 des Deckelelements 26, eingebettet und dabei beispielsweise in der genannten Aufnahme des Deckelelements 26 aufgenommen.

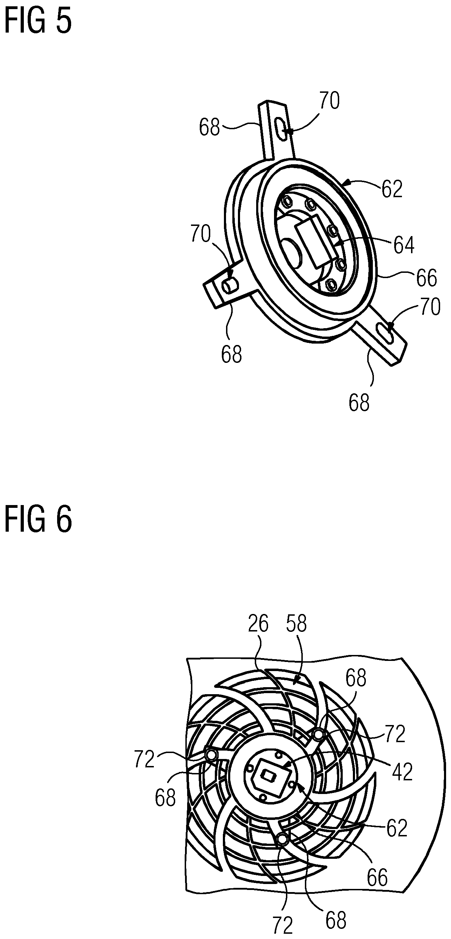

Bei der dritten Ausführungsform jedoch ist ein Zwischenbauteil 62 vorgesehen, welches separat von dem Deckelelement 26 ausgebildet und mit dem Deckelelement 26, insbesondere reversibel lösbar, verbunden ist. Dies bedeutet, dass das Zwischenbauteil 62 und das Deckelelement 26 für sich betrachtet als separate Komponenten ausgebildet sind, welche miteinander verbunden sind. Wie besonders gut aus einer Zusammenschau von FIG 5 und 6 erkennbar ist, ist durch das Zwischenbauteil 62 eine Aufnahme 64 gebildet, in welcher die Leiterplatte 42 zumindest teilweise, insbesondere zumindest überwiegend oder vollständig, aufgenommen ist. Das Zwischenbauteil 62 ist beispielsweise aus einem Kunststoff und dabei insbesondere durch Spritzgießen hergestellt. Dabei ist es denkbar, dass das Zwischenbauteil 62 bzw. dessen Kunststoff an die Leiterplatte 42 angespritzt und dadurch mit der Leiterplatte 42, insbesondere direkt, verbunden ist. Mit anderen Worten ist die Leiterplatte 42 beispielsweise dadurch an dem Zwischenbauteil 62 gehalten, dass das Zwischenbauteil 62 bzw. dessen Kunststoff an die Leiterplatte 42 angespritzt ist. Ferner ist es denkbar, dass die Leiterplatte 42, insbesondere in der Aufnahme 64, an das Zwischenbauteil 62 angeschraubt und somit an dem Zwischenbauteil 62 gehalten ist. Alternativ oder zusätzlich ist es möglich, dass das Zwischenbauteil 62 an das Deckelelement 26 angeschraubt und dadurch mit dem Deckelelement 26 verbunden ist.

Hierzu weist das Zwischenbauteil 62 einen die Aufnahme 64 bildenden Grundkörper 66 sowie Laschen 68 auf, welche, insbesondere sternförmig, in radialer Richtung der elektrischen Maschine 10 nach außen von dem Grundkörper 66 abstehen. Die Laschen 68 sind dabei Schraublaschen, welche jeweils wenigstens eine als Durchgangsöffnung ausgebildete Schrauböffnung 70 aufweisen. Durch die jeweilige Schrauböffnung 70 wird beispielsweise eine jeweilige, aus FIG 6 erkennbare Schraube 72 hindurchgesteckt, welche mit dem Deckelelement 26 verschraubt wird. Dadurch wird das Zwischenbauteil 62 mit dem Deckelelement 26 verschraubt. Insgesamt ist erkennbar, dass die Leiterplatte 42 somit mittels wenigstens einer Schraubverbindung an dem Deckelelement 26 gehalten und insbesondere in das Deckelelement 26 integriert ist. Dabei ist die Leiterplatte 42 unter Vermittlung des Zwischenbauteils 62 an dem Deckelelement 26 gehalten.

Ferner ist insgesamt erkennbar, dass die Leiterplatte 42 mit dem Sensorelement 44 und somit der Drehgeber insgesamt derart an dem Deckelelement 26 gehalten und somit angeordnet sind, dass eine Geberfunktionalität des Drehgebers insbesondere hinsichtlich der Erfassung der Drehstellungen, vollständig in dem Deckelelement 26 vorgenommen wird. Insbesondere sind die Laschen 68 in Umfangsrichtung des Grundkörpers 66 über dessen Umfang gleichmäßig verteilt angeordnet, sodass eine vorteilhafte Anbindung des Zwischenbauteils 62 an das Deckelelement 26 realisiert werden kann.

Die Leiterplatte 42 ist beispielsweise in der Aufnahme 64 mit dem Zwischenbauteil 62 verschraubt. Alternativ oder zusätzlich ist beispielsweise die Leiterplatte 42, insbesondere in axialer Richtung, in die zuvor genannte Aufnahme, insbesondere der Aufnahme 64, eingesteckt und insbesondere dadurch an dem Deckelelement 26 bzw. an dem Zwischenbauteil 62 gehalten.

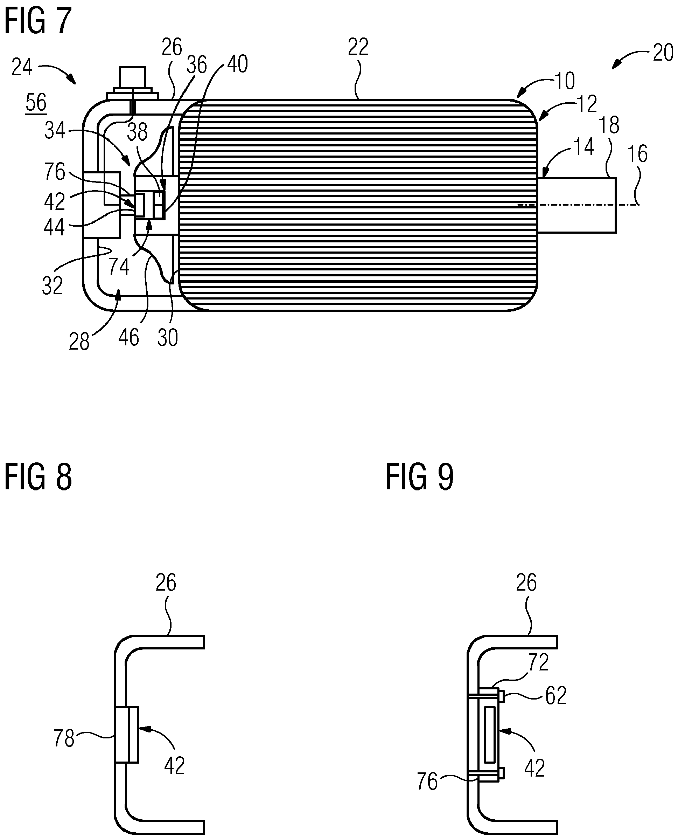

FIG 7 zeigt eine vierte Ausführungsform der elektrischen Maschine 10. Bei der vierten Ausführungsform sind - um insbesondere den axialen Bauraumbedarf der elektrischen Maschine 10 besonders gering halten zu können - das erste Sensorelement 36 sowie die Leiterplatte 42 mit dem zweiten Sensorelement 44 vollständig in der Welle 18 des Rotors 14 aufgenommen. Hierzu weist die Welle 18 eine Aufnahme 74 auf, in welcher die Sensorelemente 36 und 44 aufgenommen sind. Unter der vollständigen Aufnahme der Leiterplatte 42 und des Sensorelements 36 in der Welle 18 bzw. in der Aufnahme 74 ist insbesondere zu verstehen, dass sowohl das Sensorelement 36 als auch die Leiterplatte 42 mit dem Sensorelement 44 in radialer Richtung des Rotors 14 nach außen hin vollständig durch die Welle 18 überdeckt sind. Die Aufnahme 74 wird auch als Aussparung bezeichnet, in welcher das Sensorelement 36 und die Leiterplatte 42 versenkt sind. Vorzugweise ist die Welle 18 aus einem ferromagnetischen Material gebildet, um dadurch die Erfassungseinrichtung 34 besonders vorteilhaft abschirmen zu können. Dabei weist beispielsweise das Deckelelement 26 eine Auskragung in Form einer Lanze 76 auf, an welcher die Leiterplatte 42, insbesondere zumindest mittelbar, gehalten ist. Die Lanze 76 überragt dabei beispielsweise die Stirnseite 32 in axialer Richtung zu der Welle 18 hin, um die Leiterplatte 42 in der Aufnahme 74 anzuordnen.

Besonders gut aus FIG 1 ist die zuvor beschriebene, einfache Realisierbarkeit der unterschiedlichen Bauvarianten erkennbar. Um beispielsweise die erste Bauvariante mit der Erfassungseinrichtung 34 zu realisieren, wird das Sensorelement 36 an dem Rotor 14 und die Leiterplatte 42 an dem Deckelelement 26 angeordnet. Um die zweite Bauvariante zu realisieren, werden das Sensorelement 36 und die Leiterplatte 42 einfach weggelassen, wobei für beide Bauvarianten das gleiche bzw. dasselbe Deckelelement 26 genutzt werden kann. Bei der zweiten Bauvariante bleiben einfach die zuvor genannte Aufnahme bzw. das Zwischenbauteil 62 und der Rotor 14 unbestückt. Dies bedeutet, dass die Leiterplatte 42 nicht an dem Deckelelement 26 und das Sensorelement 36 nicht an dem Rotor 14 angeordnet wird. Ansonsten besteht beispielsweise kein Unterschied zwischen den Bauvarianten.

FIG 8 bis 11 veranschaulichen unterschiedliche Möglichkeiten, die Leiterplatte 42 an dem Deckelelement 26 zu halten. Die Leiterplatte 42 bildet beispielsweise eine Elektronik des Drehgebers oder ist Bestandteil einer solchen Elektronik, welche auch als Geberelektronik bezeichnet wird. Die Leiterplatte 42 bzw. die Geberelektronik kann eine mechanische Aufnahme insbesondere in Form des Zwischenbauteils 62 erfahren, wobei diese mechanische Aufnahme bzw. das Zwischenbauteil 62 separat von dem Deckelelement 26 ausgebildet und mit dem Deckelelement 26 verbunden ist. Alternativ ist es denkbar, dass die insbesondere mechanische Aufnahme direkt in das beispielsweise als Spritzguss-Deckel ausgebildete Deckelelement 26 geformt wird, was beispielsweise bei einer in FIG 8 veranschaulichten fünften Ausführungsform vorgesehen ist. Die zuvor genannte, insbesondere mechanische, und einstückig mit dem Deckelelement 26 ausgebildete bzw. durch das Deckelelement 26 gebildete Aufnahme ist in FIG 8 mit 78 bezeichnet und beispielsweise durch das zuvor genannte Spritzgießen, in dessen Rahmen das Deckelelement 26 hergestellt wird, hergestellt.

FIG 9 zeigt eine sechste Ausführungsform, bei welcher eine Schraubvariante vorgesehen ist. Bei dieser Schraubvariante kommt das Zwischenbauteil 62 zum Einsatz, an welchem die Leiterplatte 42 gehalten ist. Bei der sechsten Ausführungsform ist das separat von dem Deckelelement 26 ausgebildete Zwischenbauteil 62 mittels jeweiliger Schrauben 72 an das Deckelelement 26 angeschraubt und dadurch an dem Deckelelement 26 gehalten, sodass die Leiterplatte 42 unter Vermittlung des Zwischenbauteils 62 an dem Deckelelement 26 gehalten ist.

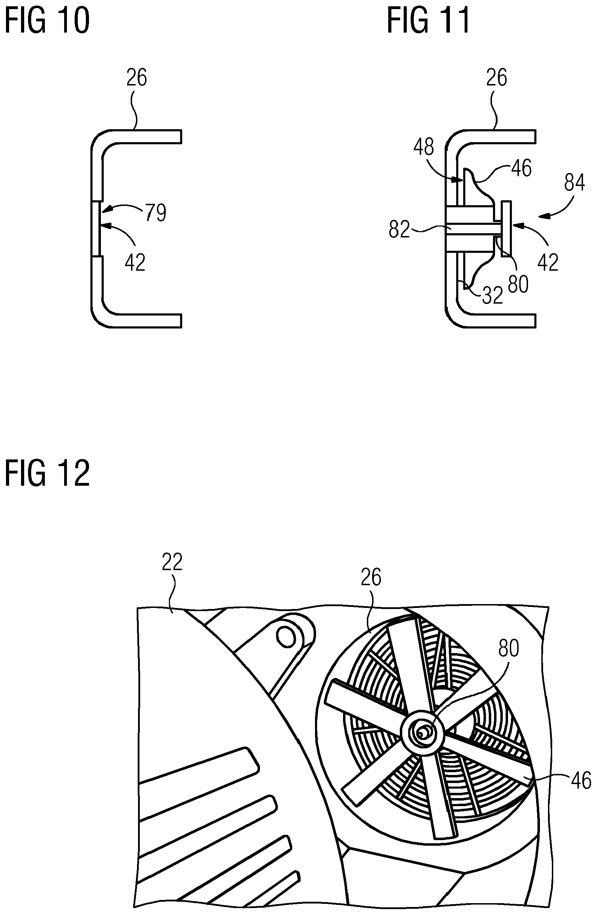

FIG 10 zeigt eine siebte Ausführungsform, bei welcher das Deckelelement 26 eine Ausnehmung 79 aufweist, welche als Aufnahme fungiert. Dabei ist die Leiterplatte 42 in axialer Richtung der elektrischen Maschine 10, insbesondere von hinten, in die Aufnahme 78 eingesteckt und insbesondere dadurch an dem Deckelelement 26 gehalten.

FIG 11 zeigt eine achte Ausführungsform der elektrischen Maschine 10. Bei der achten Ausführungsform ist das Lüfterrad 46 in axialer Richtung des Rotors 14 zwischen der Leiterplatte 42 und der Stirnseite 32 des Deckelelements 26 angeordnet. Bei der achten Ausführungsform ist der Lüfter 48 beispielsweise ein Fremdlüfter, welcher beispielsweise einen stehenden Teil in Form eines stehenden Wellenzapfens 80 aufweist. Dabei ist das Lüfterrad 46 beispielsweise auf dem stehenden Wellenzapfen 80 angeordnet und relativ zu diesem, insbesondere um die Drehachse 16, drehbar. Der stehende Wellenzapfen 80 jedoch steht fest und ist somit nicht relativ zu dem Deckelelement 26 drehbar, sodass dadurch, dass die Leiterplatte 42 drehfest mit dem Wellenzapfen 80 verbunden ist, die Leiterplatte 42 nicht relativ zum Deckelelement 26 drehbar ist. Jedoch kann sich das Lüfterrad 46, insbesondere um die Drehachse 16, relativ zu dem Deckelelement 26 drehen. Dabei ist die Leiterplatte 42 in axialer Richtung zwischen dem Lüfterrad 46 und der Welle 18 bzw. dem Rotor 14 angeordnet. Somit kann das Sensorelement 36 an der Welle 18 der elektrischen Maschine 10 verbleiben.

Die elektrische Verbindung zwischen der Leitung 50 und der Leiterplatte 42 erfolgt beispielsweise in dem bzw. über den stehenden Wellenzapfen 80, welcher hohl ausgeführt ist und demzufolge einen beispielsweise in axialer Richtung verlaufenden Kanal 82 aufweist, in welchem zumindest ein Längenbereich der Leitung 50 verläuft. Alternativ ist es denkbar, dass die Leitung 50 auf einer dem Rotor 14 zugewandten Seite 84 der Leiterplatte 42 mit dieser elektrisch verbunden ist, insbesondere bei einer sogenannten Einkabellösung, sodass die elektrische Verbindung zwischen der Leiterplatte 42 und der Leitung 50 in Richtung der Welle 18 vorgesehen ist.

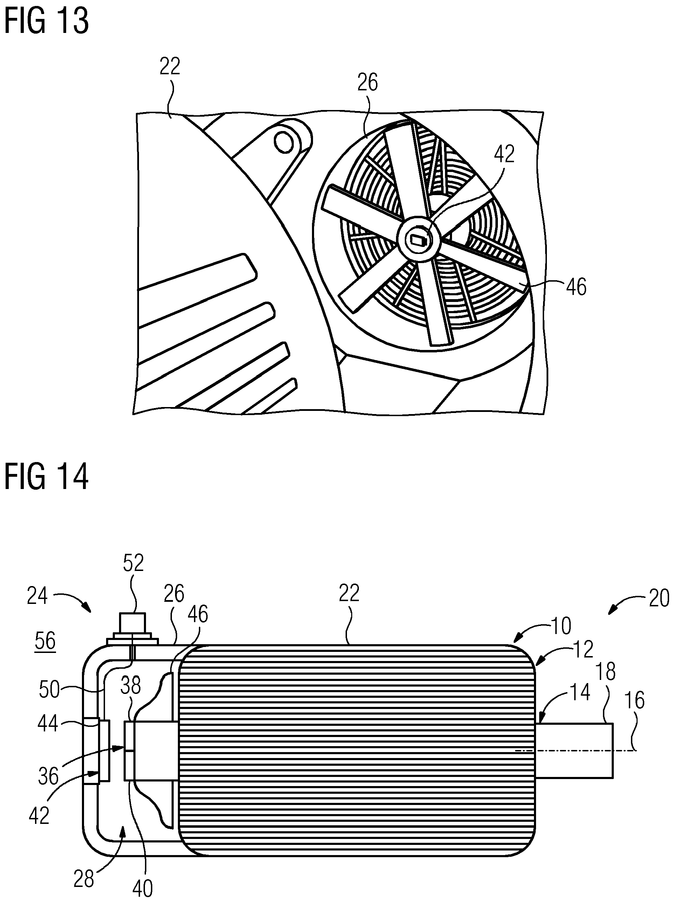

FIG 12 und 13 veranschaulichen die achte Ausführungsform weiter, wobei gemäß FIG 12 die Leiterplatte 42 noch nicht an dem Wellenzapfen 80 montiert ist. Somit ist aus FIG 12 der Wellenzapfen 80 erkennbar. Gemäß FIG 13 ist die Leiterplatte 42 an dem Wellenzapfen 80 gehalten und insbesondere drehfest mit dem Wellenzapfen 80 verbunden, sodass in FIG 13 der stehende Wellenzapfen 80 nicht mehr erkennbar ist.

FIG 14 zeigt eine neunte Ausführungsform der elektrischen Maschine 10, bei welcher eine durch die Leitung 50 gebildete Verkabelung an einem Innenrand des Deckelelements 26 vorgesehen ist. Das weitere Bauelement 52 ist beispielsweise eine Anschlussbuchse, über welche beispielsweise ein Stecker, insbesondere elektrisch, mit der Leitung 50 verbunden werden kann. Dabei ist es vorzugsweise vorgesehen, dass auch das insbesondere als Anschlussbuchse ausgebildete weitere Bauelement 52 in das Deckelelement 26 integriert ist.

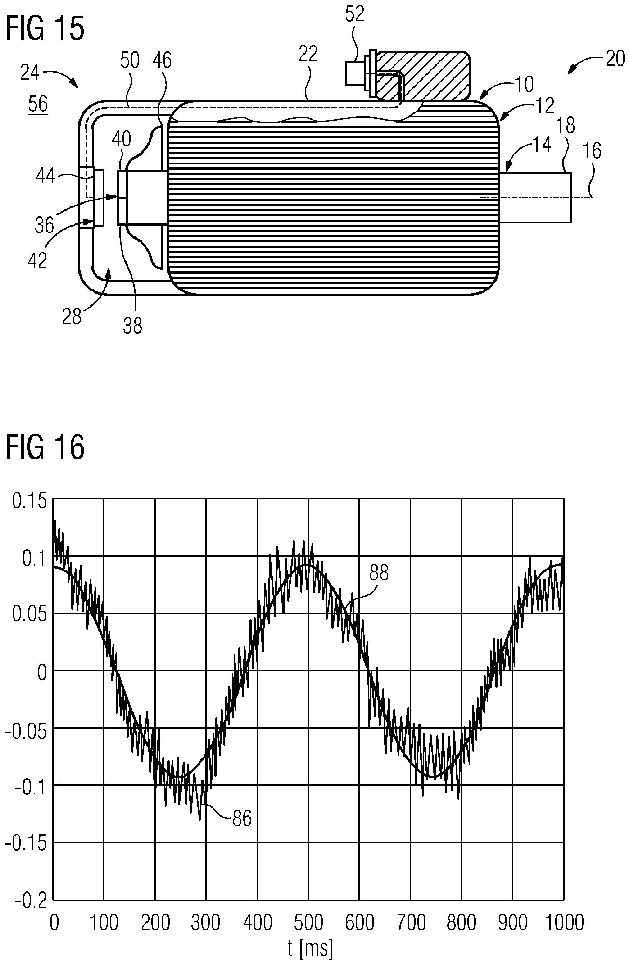

FIG 15 zeigt eine zehnte Ausführungsform, wobei eine integrierte Verkabelung inklusive einer allgemeinen Signal-/Versorgungskoppelverbindung (Stecker oder galvanisch getrennt, induktiv/kapazitiv/optisch) zur elektrischen Maschine 10 vorgesehen ist, sodass das auch als Gebersignal bezeichnete Signal ähnlich wie ein Wickelkopf-Temperatursensor zu einem Anschlusskasten geführt und vorteilhaft ein Kabelstrang mit wenigstens einer elektrischen Leitung gebildet werden kann, oder durch geeignete Kabel sogar innerhalb einer Leistungsverkabelung insbesondere in Form eines Einkabelanschlusses geführt werden kann. Mit anderen Worten ist es bei der zehnten Ausführungsform vorgesehen, dass die Leitung 50 innerhalb einer Wandung des Deckelelements 26 verläuft, wobei die Leitung 50 beispielsweise auch innerhalb einer Wandung des Maschinengehäuses 22 verläuft.

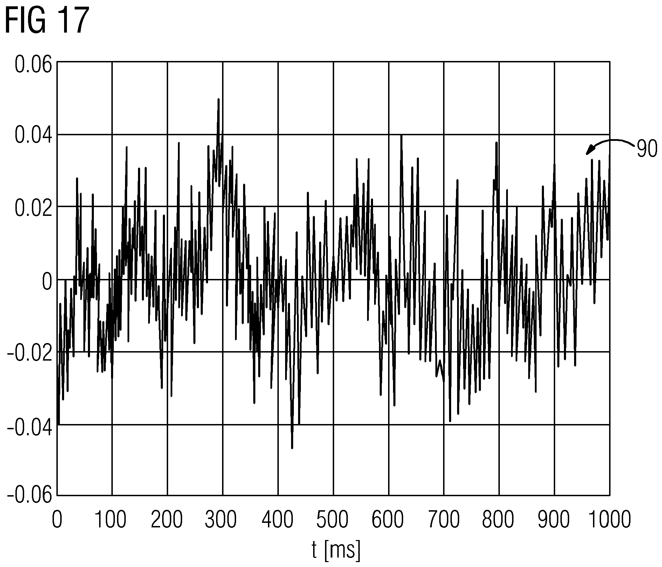

Schließlich zeigen FIG 16 und 17 jeweilige Diagramme zum Veranschaulichen eines Verfahrens zum Betreiben der elektrischen Maschine 10. Bei dem Verfahren ist es vorgesehen, dass das von dem Drehgeber bereitgestellte Signal korrigiert wird, um die Drehstellung besonders präzise erfassen zu können. Insbesondere wird das Signal mit Korrekturwerten korrigiert, wobei die Korrekturwerte aus der Kenntnis der Konstruktion der elektrischen Maschine 10 und/oder aus einer Messung stammen, in deren Rahmen Auslenkungen der Leiterplatte 42, insbesondere relativ zum Sensorelement 36, erfasst werden. Im Rahmen der genannten Messung werden beispielsweise mittels wenigstens eines Beschleunigungssensors Beschleunigungen und/oder Bewegungen bzw. Auslenkungen der Leiterplatte 42 erfasst, welche mit dem Beschleunigungssensor versehen ist.

Das in FIG 16 gezeigte Diagramm zeigt ein Signal 86, welches beispielsweise die Abweichung des Gebersignals von der jeweiligen tatsächlichen Drehstellung des Rotors 14 als IstStellung veranschaulicht. Ferner veranschaulicht ein Verlauf 88 die Anpassung eines langreichweitigen sinusartigen Fehleranteils. FIG 17 zeigt ein Signal 90, welches die Differenzauftragung der Anpassung zur Lageabweichung veranschaulicht. Der so ermittelte Fehler dient der Abschätzung des erreichbaren Lagefehlers für den Drehgeber bei Vermeidung des langreichweitigen Fehlers. Es wird als zweifache Standardabweichung der Lagefehler-Wert von 0,03 Grad ermittelt.

Diesem Verfahren liegt die Erkenntnis zugrunde, dass Fehler wie bei einer exzentrischen Montierung auftreten können, wenn die aktuelle Lage bzw. Position des Drehgebers gegen die Drehachse 16 bzw. gegen den Sensor bzw. Rotor 14, insbesondere in radialer Richtung, verschoben ist. Eine Exzentrizität kann in erster Näherung als ein sinusartiger Fehler pro Umdrehung erscheinen. Hierbei kann mittels statistischer Korrektur der mittlere Fehler der Sinusabweichung ermittelt werden.

## Patentansprüche

1. Elektrische Maschine (10), mit einem Stator (12), mit einem um eine Drehachse (16) relativ zu dem Stator (12) drehbaren Rotor (16), mit einem Maschinengehäuse (22), in welchem der Stator (12) und der Rotor (14) jeweils zumindest überwiegend aufgenommen sind, mit einem separat von dem Maschinengehäuse (22) ausgebildeten und an dem Maschinengehäuse (22) gehaltenen Deckelelement (26), mit einem Aufnahmeraum (28), welcher jeweils teilweise durch das Maschinengehäuse (22) und durch das Deckelelement (26) begrenzt ist, und mit einer zum Erfassen von Drehstellungen und/oder einer Drehzahl des Rotors (14) ausgebildeten Erfassungseinrichtung (34), welche wenigstens ein in dem Aufnahmeraum (28) angeordnetes und mit dem Rotor (14) mitdrehbares erstes Sensorelement (36) und wenigstens eine in dem Aufnahmeraum (28) angeordnete Leiterplatte (42) mit zumindest einem zweiten Sensorelement (44) aufweist, mittels welchem unter Zusammenwirken mit dem ersten Sensorelement (36) die Drehstellungen und/oder die Drehzahl des Rotors (14) erfassbar sind, **dadurch ge-kennzeichnet**, dass die Leiterplatte (42) an dem Deckelelement (26) gehalten ist.

2. Elektrische Maschine (10) nach Anspruch 1, **dadurch gekennzeichnet, dass** das Deckelelement (26) aus einem Kunststoff gebildet ist.

3. Elektrische Maschine (10) nach Anspruch 2, **dadurch gekennzeichnet, dass** das Deckelelement (26) durch Spritzgießen hergestellt ist.

4. Elektrische Maschine (10) nach Anspruch 3, **dadurch gekennzeichnet, dass** das Deckelelement (26) an die Leiterplatte (42) angespritzt ist.

5. Elektrische Maschine (10) nach Anspruch 1, **dadurch gekennzeichnet, dass** das Deckelelement (26) aus einem metallischen Werkstoff gebildet ist.

6. Elektrische Maschine (10) nach einem der vorhergehenden Ansprüche, **dadurch gekennzeichnet, dass** die Leiterplatte (42) zumindest teilweise, insbesondere zumindest überwiegend oder vollständig, in einer an dem Deckelelement (26) vorgesehenen Ausnehmung (64,79) des Deckelelements (26) aufgenommen ist.

7. Elektrische Maschine (10) nach Anspruch 6, **dadurch gekennzeichnet, dass** die Leiterplatte (42) in die Ausnehmung (64,79) eingesteckt ist.

8. Elektrische Maschine (10) nach einem der vorhergehenden Ansprüche, **dadurch gekennzeichnet, dass** die Leiterplatte (42) mittels wenigstens einer Schraubverbindung (72(an dem Deckelelement (26) gehalten ist.

9. Elektrische Maschine (10) nach einem der vorhergehenden Ansprüche, **dadurch gekennzeichnet, dass** wenigstens ein in dem Aufnahmeraum (28) aufgenommenes Lüfterrad (46) vorgesehen ist, mittels welchem ein Kühlluftstrom zum Kühlen zumindest eines Teilbereiches der elektrischen Maschine (10) zu fördern ist, wobei das Deckelelement (26) als Lüfterdeckel ausgebildet ist und wenigstens eine Durchgangsöffnung (58) für Luft aufweist.

10. Elektrische Maschine (10) nach Anspruch 9, **dadurch gekennzeichnet, dass** das Lüfterrad in axialer Richtung des Rotors (14) zwischen der Leiterplatte (42) und einer den Aufnahmeraum (28) in axialer Richtung des Rotors (14) zumindest teilweise begrenzenden Stirnseite (32) des Deckelelements (26) angeordnet ist.

11. Elektrische Maschine (10) nach einem der vorhergehenden Ansprüche, **dadurch gekennzeichnet, dass** das erste Sensorelement (36) und die Leiterplatte (42) zumindest teilweise, insbesondere zumindest überwiegend oder vollständig, in einer Welle (18) des Rotors (14) aufgenommen sind.

12. Elektrische Maschine (10) nach einem der vorhergehenden Ansprüche, **dadurch gekennzeichnet, dass** innerhalb einer Wandung des Deckelelements (26) wenigstens eine elektrisch mit der Leiterplatte (42) und elektrisch mit wenigstens einem weiteren Bauelement (52) der elektrischen Maschine (10) verbundene Leitung (50) verläuft.

13. Elektrische Maschine (10) nach einem der vorhergehenden Ansprüche, **dadurch gekennzeichnet, dass** das Deckelelement (26) reversibel lösbar an dem Maschinengehäuse (10) gehalten ist.

14. Elektrische Maschine (10) nach einem der vorhergehenden Ansprüche, **dadurch gekennzeichnet, dass** das erste Sensorelement (36) als ein Magnet, insbesondere als ein Permanentmagnet und vorzugsweise als ein Diametralmagnet oder Multipolmagnet, ausgebildet ist, und/ oder dass das zweite Sensorelement (44) als magnetoresistiver Drehwinkelsensor ausgebildet ist.

15. Verfahren zum Betreiben einer elektrischen Maschine (10), mit einem Stator (12), mit einem um eine Drehachse (16) relativ zu dem Stator (12) drehbaren Rotor (14), mit einem Maschinengehäuse (22), in welchem der Stator (12) und der Rotor (14) jeweils zumindest überwiegend aufgenommen sind, mit einem separat von dem Maschinengehäuse (22) ausgebildeten und an dem Maschinengehäuse (22) gehaltenen Deckelelement (26), mit einem Aufnahmeraum (28), welcher jeweils teilweise durch das Maschinengehäuse (22) und durch das Deckelelement (26) begrenzt ist, und mit einer zum Erfassen von Drehstellungen und/oder einer Drehzahl des Rotors (14) ausgebildeten Erfassungseinrichtung (34), welche wenigstens ein in dem Aufnahmeraum (28) angeordnetes und mit dem Rotor (14) mitdrehbares erstes Sensorelement (36) und wenigstens eine in dem Aufnahmeraum (28) angeordnete Leiterplatte mit (42) zumindest einem zweiten Sensorelement (44) aufweist, mittels welchem unter Zusammenwirken mit dem ersten Sensorelement (36) die Drehstellungen und/oder die Drehzahl des Rotors (14) erfasst werden, **dadurch gekennzeichnet, dass** als die Leiterplatte (42) eine an dem Deckelelement (26) gehaltene Leiterplatte (42) verwendet wird.
